# EUROPÄISCHE PATENTSCHRIFT

(11) **EP 0 740 623 B1**
(45) Veröffentlichungstag und Bekanntmachung des Hinweises auf die Patenterteilung: **26.05.1999**
(21) Anmeldenummer: 95907609.2
(22) Anmeldetag: 25.01.1995
(51) Int. Cl.: B60T 8/36

(54) **ELEKTROHYDRAULISCHE DRUCKREGELVORRICHTUNG**
ELECTROHYDRAULIC PRESSURE REGULATOR
REGULATEUR DE PRESSION ELECTROHYDRAULIQUE

(30) Priorität: 29.01.1994 DE 4402735
(43) Veröffentlichungstag der Anmeldung: 06.11.1996
(73) Patentinhaber: Continental Teves AG & Co. oHG, 60488 Frankfurt (DE)
(72) Erfinder: STEFFES, Helmut, D-65795 Hattersheim (DE); DINKEL, Dieter, D-65817 Eppstein (DE); VOGEL, Günther, D-63303 Dreieich (DE); VOLZ, Peter, D-64921 Darmstadt (DE)
(86) Internationale Anmeldenummer: EP9500266
(87) Internationale Veröffentlichungsnummer: WO9520510

(56) Entgegenhaltungen:
- EP-A- 0 379 957
- WO-A-89/05746
- WO-A-89/10286
- WO-A-92/08630
- WO-A-92/12878
- DE-A- 4 232 205

## Beschreibung

Die Erfindung betrifft eine elektrohydraulische Druckregelvorrichtung, insbesondere Bremsdruckregelvorrichtung, nach dem Oberbegriff des Anspruches 1, sowie ein Verfahren zur Herstellung einer solchen Druckregelvorrichtung.

Eine elektrohydraulische Druckregelvorrichtung der gattungsbildenden Art ist beispielhaft in der internationalen Veröffentlichung WO 92/12878 beschrieben, wonach über die bereits hinreichend bekannte Blockbauweise des Ventilaufnahmekörpers hinaus, der Deckel mittels eines plattenförmigen Trägerelementes unterteilt ist, um einerseits einen elektronischen Regler oder Teile eines elektronischen Reglers aufzunehmen, andererseits die elektrische Verbindung zwischen dem elektronischen Regler und den an den Elektromagnetventilen überstehenden Kontaktelementen herzustellen. Der Deckel ist mit den Spulen der Elektromagnetventile auf die Ventildomen des Ventilaufnahmekörpers aufgesteckt, wobei zur Herstellung des elektrischen Anschlusses **die Kontaktelemente** an den im Deckel integrierten elektronischen bzw. elektrischen Komponenten **angeschlossen sind**. Zur Befestigung der Spule am Trägerelement wird vorgeschlagen, elastische Halterungen, beispielsweise Federn zu verwenden, oder die Spulen in einem elastischen Formkörper einzubetten. Beide Varianten bedürfen einer Vereinfachung.

Aus der EP-A-0379957 ist eine elektrohydraulische Druckregelvorrichtung bekannt geworden, bei der in einem Ventilaufnahmekörper mehrere elektromagnetisch betätigbare hydraulische Ventile angeordnet sind, die mittels eines plattenförmigen Trägerelementes am Ventilaufnahmekörper gehalten sind. Das Trägerelement weist mehrere Durchgangsöffnungen auf, wobei eine mit einer Gewindebohrung im Bereich zwischen den Hydraulikventilen versehen ist, in die von der Außenfläche des Deckels ein den Deckel am Ventilaufnahmekörper positionierender Haltebolzen eingebracht ist. Das Trägerelement weist weitere Durchgangsöffnungen zur Aufnahme von Schrauben auf, die in den Ventilaufnahmekörper eingedreht sind und das Trägerelement mit den Hydraulikventilen am Ventilaufnahmekörper halten.

Folglich ist es die Aufgabe der Erfindung, die aus dem genannten Stand der Technik bekannte Druckregelvorrichtung zu verbessern, um eine kompakte sowie eine funktionsoptimierte Vereinigung der Spulen im Trägerelement zu schaffen, die möglichst einfach herzustellen und zu prüfen ist, wobei unterschiedliche Wärmedehnungen der Bauteile möglichst spannungsfrei aufgenommen werden sollen. Ferner soll ein geeignetes Verfahren zur Herstellung einer solchen Druckregelvorrichtung geschaffen werden.

Die gestellten Aufgaben werden erfindungsgemäß durch die kennzeichnenden Merkmale des Patentanspruchs 1 sowie betreffend des Verfahrens durch den Patentanspruch 7 gelöst.

Hierdurch ist ein besonders wasserdichter Verschluß der Halterung für die Spulen im Deckel gegeben, der besonders einfach herzustellen ist und eine vorgefertigte Einheit des Deckels mit den Spulen bildet.

Hinsichtlich des Herstellungsverfahrens wird vorgeschlagen, eine entsprechend vorbereitete Leiterbahn bzw. eine als Stanzgitter vorgefertigte Platine in eine Spritzgußform einzulegen, so daß die Spritzgußmasse die Leiterbahnen vollständig umschließt, womit das aus der Spritzgußmasse hervorgegangene Trägerelement mit den Durchgangsöffnungen über die vormontierte Spuleneinheit gestülpt werden kann, bis die Kontaktelemente der Spulen die Leiterbahnen berühren. Die Durchgangsöffnungen werden so dann mit geeigneten Verschlußmitteln in Form von Vergußmasse, Lack, Heißkleber oder Ähnlichem wasserdicht verschlossen.

Weitere Merkmale, Vorteile und Anwendungsmöglichkeiten gehen aus der folgenden Darstellung mehrerer Ausführungsbeispiele hervor.

Es zeigen:
- Fig. 1: den Deckel einer elektrohydraulischen Druckregelvorrichtung im Querschnitt,
- Fig. 2: eine alternative Ausführung zur Gestaltung der Spule in vergrößerter Darstellung.

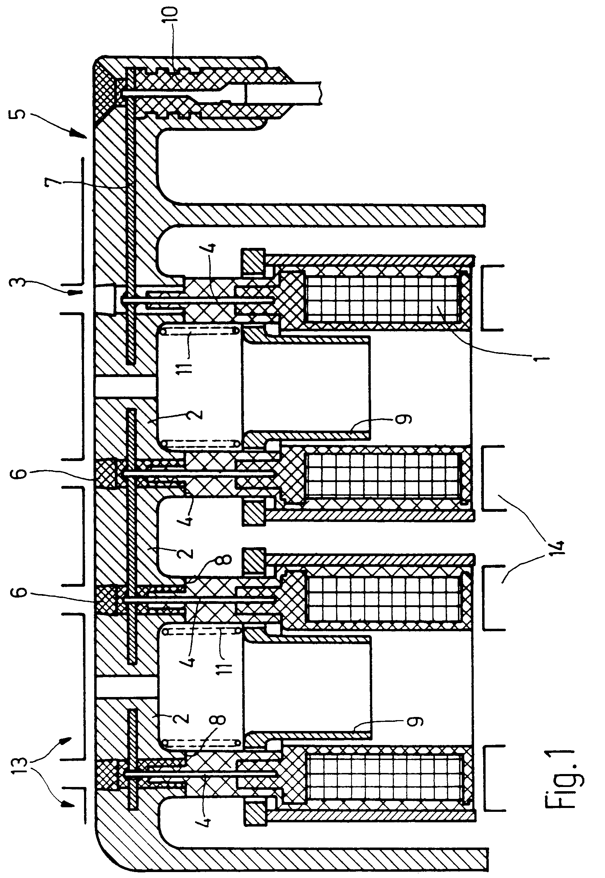

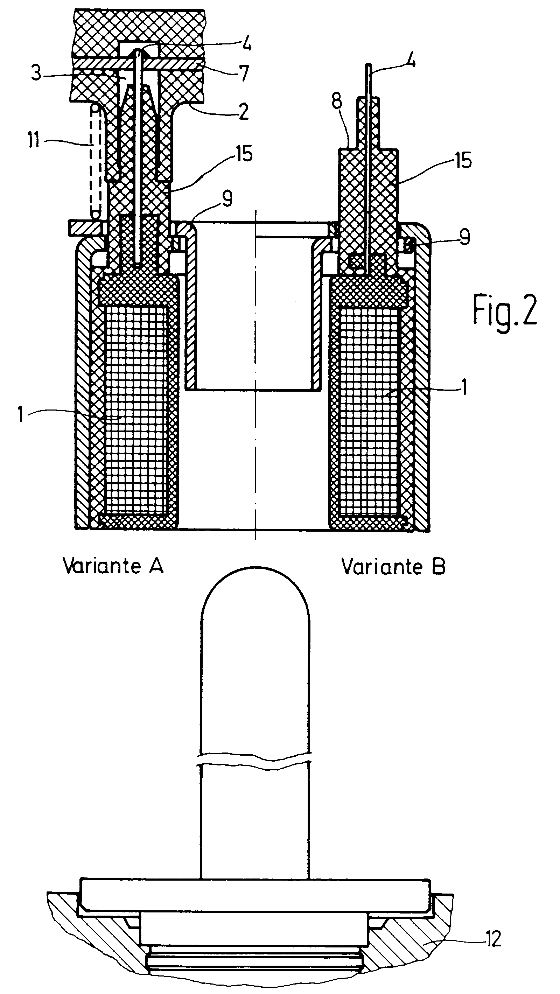

Die Fig. 1 zeigt eine Seitenansicht der Druckregelvorrichtung begrenzt auf den Bereich des Deckels 5, dessen Boden das im wesentlichen plattenförmige Trägerelement 2 bildet, welches entlang seiner Umfangsfläche zu einem stegförmigen Wandabschnitt ausgeformt ist, der nach vollzogener Montage an der Oberfläche des im wesentlichen blockförmig gestalteten Ventilaufnahmekörpers zur Anlage kommt. Das Trägerelement 2 bildet somit eine homogene Einheit mit dem Deckelmaterial, das vorzugsweise aus Kunststoff spritzgegossen ist. Eingegossen im Trägerelement 2 befinden sich die als Platine dargestellten Leiterbahnen 7, die sich nahezu entlang der gesamten Deckelbreite und -tiefe erstrecken, so daß auch über einen Fortsatz am Deckel 5 ein außerhalb der Deckelwandung befindlicher Steckeranschluß 10 mit den Leiterbahnen 7 in Verbindung steht. Zur elektrischen Kontaktierung der Spulen mit den Leiterbahnen sind entsprechend der Anzahl der aus den Spulen 1 herausgeführten elektrischen Kontaktelemente 4 Durchgangsöffnungen 3 im Trägerelement 2 vorgesehen, in die jeweils die Enden der Kontaktelemente 4 eingefügt sind, bis diese durch die Anschläge 8 der Spulenkörper in ihre Einschubtiefe in den Durchgangsöffnungen 3 fixiert sind. Durch die entsprechende Lagefixierung der Kontaktelemente 4 in den Öffnungen der Leiterbahnen 7 ist entsprechend dem Ausführungsbeispiel von außen ein automatengerechtes Verlöten der Kontaktstellen innerhalb der Durchgangsöffnungen gewährleistet. Es sind jedoch auch andere Verbindungsverfahren möglich, wie z.B. bei Verwendung eines Stanzgitters als Leiterbahn, so daß die Kontaktelemente 4 mit der Leiterbahn 7 verschweißt werden können. Eine besonders einfache Verbindung ergibt sich durch ein Verrasten oder Verklemmen der Spulenkontakte in den Leiterbahnen. Die Durchgangsöffnungen sind zum Schutz gegen Feuchtigkeit und Schmutz mit einem Verschlußmittel 6 versehen, das sowohl als elastische wie auch plastische Masse in die Durchgangsöffnungen 3 beispielsweise eingespritzt bzw. gegossen werden kann. Ferner eignen sich Lacke sowie Heißkleber oder ähnliche korrosionsfeste Füllmassen, um die Durchgangsöffnungen 3 zu verschließen. Im abbildungsgemäßen Ausführungsbeispiel ist vorgeschlagen, über einem nur schematisch angedeuteten Spritzwerkzeug 13 die Füllmasse in die Durchgangsöffnungen 3 unter entsprechend hohem Druck zu spritzen, wobei jeweils zur gleichmäßigen Verteilung und zum Ausfüllen der gesamten Durchgangsöffnung die in die Durchgangsöffnungen 3 hineinragenden Leiterbahnen 7 Aussparungen aufweisen, die ein Hindurchdringen der Füllmasse bis jeweils zum Anschlag 8 jeder Durchgangsöffnung 3 sicherstellen. Der hierdurch auf die Stirnflächen der Spulen 1 wirksame hydraulische Druck wird über die entgegengelegene Stützvorrichtung 14, die hier gleichfalls nur schematisch angedeutet ist, sicher aufgenommen. Die Zentrierung der Spulen 1 auf den in dieser Abbildung nicht explizit dargestellten Ventildomen, die wie aus Fig. 2 hervorgeht, am blockförmigen Ventilaufnahmekörper 12 überstehen und in den Hohlraum der Spulen 1 bzw. des Deckels 5 eindringen, geschieht über einen radial verlagerbaren Jochring 9, der von einer Druckfeder 11 belastet einen Radialspielausgleich zwischen dem Ventilaufnahmekörper und den Spulen 1 gewährleistet. Gleichzeitig wird über die Druckfeder 11 auf dem Jochring 9 eine Anpreßkraft erzeugt, die für eine sichere Kontaktierung des äußeren Stahlspulenmantels sorgt, so daß der Magnetfluß in der Spule geschlossen ist. Im Deckelboden und damit im Bereich des Trägerelementes 2 sind beispielhaft zwei weitere Löcher vorgesehen, die bei hängender Ventilblockanordnung, d.h. bei Ausrichtung des Deckels 5 mit den Öffnungen nach unten für eine zusätzliche Belüftung des Deckelinnenraumes und damit zur Minderung der Bildung von Schwitzwasser beitragen sollen. Die Löcher sind jedoch von untergeordneter Bedeutung für das Wesen der Erfindung.

In der gezeigten Ausführungsform des Deckels 5 ist der Steckeranschluß 10 in Richtung der Spulen nach außen zu eine für die Ansteuerung der Elektromagnetventile erforderliche Steuer- und Regelelektronik geführt. Es ist jedoch auch möglich, bei entsprechender Miniaturisierung oder bei entsprechenden Platzverhältnissen, die elektronischen Bauteile der Steuer- und Regelvorrichtung innerhalb des Deckels, d.h im Trägerelement 2 und damit an den Leiterbahnen 7 mit einzuspritzen, d.h. im Deckel 5 zu integrieren. Eine weitere Alternative zur Anordnung der in Abbildung nicht-dargestellten Steuer- und Regelelektronik ergibt sich durch eine entsprechende Ausformung des Deckeloberteils in Form eines Rahmens, so daß die anstatt nach unten gerichtete Steckerverbindung 10 in die entgegengesetzte Richtung nach oben und damit innerhalb des Rahmens direkt mit dem elektronischen Bauteilen einer Steuer- und Regelelektronik einmündet. Der Rahmen des Deckels wäre dementsprechend mit einer korrosionsfesten Füllmasse oder einem separaten Verschlußdeckel gegen äußere unerwünschte Einflüsse zu schützen.

In der Fig. 2 soll lediglich auf die Einzelheit zur Ausgestaltung des Kontaktelementes 4, welches aus der Spule 1 herausgeführt wird, näher eingegangen werden. Bei der erfindungsgemäß vorgeschlagenen Druckregelvorrichtung bietet es sich an, von der bisherigen Lösung zur Verwendung eines separat mit in den Spulenkörper 15 (Isolierstoff) der Spule 1 eingebrachten Kontaktstiftes abzuweichen, und wie die Variante B in Abbildung Fig. 2 zeigt, daß elektrische Kontaktelement 4 als blanken Spulendraht direkt aus dem Isolierstoff der Spule 1 herauszuführen und in die Öffnung der Leiterbahnen einzufädeln. Dies stellt eine besonders kostengünstige Lösung dar. Der Jochring 9 ist gleichfalls wie im vorangegangenen Ausführungsbeipiel zum Ausgleich von Bauteiltoleranzen zwischen Spule und Ventilaufnahmekörper bzw. Ventildom als zweigeteilter, radial verlagerbarer Jochring ausgeführt. Der Anschlag 8 kann zur Befestigung des Spulenkörpers 15 am Trägerelement 2 eine Klebe- bzw. Schweißfläche aufweisen. Eine alternative Befestigungsmethode bietet der verjüngte Fortsatz oberhalb des Anschlags 8 zum Zwecke einer reib- und ggf. auch formschlüssigen Befestigung der Spule 1 in der Durchgangsöffnung 3 des Trägerelementes 2 (Variante A).

Im nachfolgenden wird auf das Herstellverfahren der Verbindung des Deckels mit den Spulen eingegangen, um nochmals die besonders einfach herzustellende und damit besonders kostengünstig und dennoch gleichzeitig funktionssichere Ausführung der Erfindung zu erläutern.

Die besonderen Vorteile des Herstellungsverfahrens sind darin zu sehen, daß die Leiterbahnen 7 als vorgefertigte Platine bzw. als Stanzgitter oder ähnliches direkt mit dem Kunststoff im Spritzwerkzeug umspritzt werden und damit eine integrale Einheit innerhalb des Deckels 5 bilden, um die Spule 1 und deren zugehörigen Teile aufzunehmen. Für jede Spule 1 sind im Deckel 5 zwei Durchgangsöffnungen 3 bereits im Gußwerkzeug berücksichtigt, so daß eine nachträgliche Bearbeitung zum Einbringen der Durchgangsöffnungen 3 entfällt.

Gleichfalls wird während des Spitzvorganges der Steckeranschluß am Gehäuse mit eingeformt. Nach Fertigstellung des Deckels 5 werden zusammen mit dem zweiteiligen Jochring 9 die Druckfedern 11 mit den Spulen 1 in den Deckel derart eingeschoben, daß die Kontaktelemente 4 in die Ausstanzungen der in die Durchgangsöffnungen 3 hineinragenden Leiterbahnen 7 passen. Die Kontaktstellen der Kontaktelemente 4 können nach Wahl oder Bedarf anschließend durch Schweißen, Löten oder einfach nur durch Verklemmen sicher mit den Leiterbahnen 7 verbunden werden. Die blanken Stellen zwischen den Kontaktelementen 4 und den Leiterbahnen 7 werden anschließend mit Vergußmasse, Lack, Heißkleber oder einem weiteren Spritzvorgang versiegelt. Sofern die Kontaktstellen im Deckel durch ein Spritzgußverfahren versiegelt werden, wird der Deckel als Werkzeugteil benutzt, so daß lediglich durch eine entsprechende, den Spritzdruck aufnehmende Stützvorrichtung an der Unterseite der Spulen 1 das Spritzwerkzeug direkt auf die Deckelaußenfläche aufgesetzt werden kann und die Spritzmasse in die Durchgangsöffnungen 3 eingedrückt wird.

### Bezugszeichenliste

- 1: Spule
- 2: Trägerelement
- 3: Durchgangsöffnungen
- 4: Kontaktelemente
- 5: Deckel
- 6: Verschlußmittel
- 7: Leiterbahn
- 8: Anschlag
- 9: Jochring
- 10: Steckverbinder
- 11: Druckfeder
- 12: Ventilaufnahmekörper
- 13: Spritzwerkzeug
- 14: Stützvorrichtung
- 15: Spulenkörper

## Patentansprüche

1. Elektrohydraulische Druckregelvorrichtung, insbesondere Bremsdruckregelvorrichtung, wie
Antiblockierregelvorrichtung, Antriebsschlupfregelvorrichtung, mit elektromagnetisch betätigbaren Hydraulikventilen, die an einem Ventilaufnahmekörper **(12)** angeordnet sind, mit Spulen **(1)**, die den Ventilaufnahmekörper **(12)** überragen, wobei die Spulen **(1)** an ihren den Ventilaufnahmekörper **(12)** überragenden Teilen mit elektrischen Kontaktelementen **(4)** versehen sind, mit einem Deckel **(5)**, der die überragenden Spulenteile und die Kontaktelemente **(4)** abdeckt, mit einem **im wesentlichen plattenförmigen** Trägerelement **(2)** zur Aufnahme der Spulen **(1)**, **das ein integraler Bestandteil** des Deckels **(5)** ist, wobei der Deckel **(5)** oder ein Teil des Deckels **(5)** als elektromagnetischer Regler oder für die Aufnahme von Anschlußteilen eines elektronischen Reglers ausgebildet ist, dadurch **gekennzeichnet**, daß das den Spulen (1) zugewandte Trägerelement (2) mehrere Durchgangsöffnungen (3) aufweist, in die **im montierten Zustand des Deckels (5)** von der Außenfläche des Deckels (5) gerichtet form- und/oder kraftschlüssige Verschlußmittel (6) eingebracht sind, **wobei** die Durchgangsöffnungen (3) die elektrischen Kontaktelemente (4) der Spulen (1) aufnehmen, die mit in die Durchgangsöffnungen (3) ragenden elektrischen Leiterbahnen (7) **im Trägerelement (2)** verbunden sind.

2. Elektrohydraulische Druckregelvorrichtung nach Anspruch 1, dadurch **gekennzeichnet**, daß die elektrischen Kontaktelemente (4) als blanke Spulendrähte direkt aus dem Gehäuse der Spulen (1) herausgeführt sind und wobei über einen Anschlag (8) **des Spulenkörpers (15)** am Trägerelement (2) die Kontaktelemente (4) in der Überdeckung mit den Leiterbahnen (7) gelangen.

3. Elektrohydraulische Druckregelvorrichtung nach Anspruch 2, dadurch **gekennzeichnet**, daß der Anschlag (8) als Stufe an einem Fortsatz des Spulenkörpers (15) angebracht ist, der jeweils von einem Kontaktelement (4) durchdrungen ist, und daß der Fortsatz form- und/oder kraftschlüssig an der Durchgangsöffnung (3) gehalten ist.

4. Elektrohydraulische Druckregelvorrichtung nach Anspruch 1, dadurch **gekennzeichnet**, daß jede Spule (1) radial spielbehaftet von einem Jochring (9) überdeckt ist, und daß eine Druckfeder (11) zwischen jedem Jochring (9) um dem Deckel (5) positioniert ist.

5. Elektrohydraulische Druckregelvorrichtung nach **Anspruch 1**, dadurch **gekennzeichnet**, daß die Leiterbahnen (7) im Trägerelement (2) integriert sind.

6. Elektrohydraulische Druckregelvorrichtung nach **Anspruch 1**, dadurch **gekennzeichnet**, daß das Trägerelement (2) einstückig mit dem Deckel (5) vereinigt ist, und daß das Trägerelement (2) zu einem Steckverbinder (10) ausgeformt ist.

7. Verfahren zur Herstellung einer elektrohydraulischen Druckregelvorichtung nach Anspruch 4, dadurch **gekennzeichnet**, daß in eine Spritzgußform die Leiterbahnen (7) eingelegt werden, die Leiterbahnen (7) mit der teigigen Spritzgußmasse in der Spritzgußform zu einem das Trägerelement (2) aufnehmenden Deckelgehäuse umspritzt werden, daß die Jochringe (9) über die Spulen (1) gestülpt werden, daß die Druckfedern (11) zwischen den Jochringen (9) und dem Trägerelement (2) im Deckel (5) positioniert und die komplettierten Spulen (1) mit ihren Kontaktelementen (4) bis zur Kontaktierung der Leiterbahnen (7) in die aus dem Spritzgießen entstandenen Durchgangsöffnungen (3) des Trägerelements (2) eingeschoben sowie mit der Leiterbahn (7) verbunden und mit Verschlußmittel (6) von der Außenfläche des Deckels (5) abgedichtet werden.

8. Verfahren zur Herstellung einer elektrohydraulischen Druckregelvorrichtung nach Anspruch 7, dadurch **gekennzeichnet**, daß die Verbindung der Kontaktelemente (4) mit den Leiterbahnen (7) durch Löten oder Schweißen oder Verrasten hergestellt wird.

9. Verfahren zur Herstellung einer elektrohydraulischen Druckregelvorrichtung nach Anspruch 7, dadurch **gekennzeichnet**, daß die Verschlußmittel (6) durch Spritzen von Vergußmasse, Lacke, Heißkleber in die Durchgangsöffnungen (3) eingebracht werden, wozu der Deckel (5) ein Bestandteil des Spritzgußwerkzeuges bildet, auf dem ein Spritzwerkzeug (13) mit fluchtend zu den Durchgangsöffnungen (3) ausgerichteten Spritzdüsen aufgesetzt wird und wobei entgegengesetzt zum Spritzwerkzeug (13) eine Stützvorrichtung (14) die Spulen (1) gegen das Trägerelement (2) drückt um den während des Spritzgießens auf die Spulen (1) übertragenen Spritzdruck aufzunehmen.

## Claims

1. Electrohydraulic pressure control device, in particular brake pressure control device such as antilock control device or traction slip control device, with electromagnetically operable hydraulic valves which are arranged on a valve-holding element (12), with coils (1) which extend over the valve-holding element (12), wherein the coils (1) are provided with electrical contact elements (4) at their parts extending beyond the valve-holding element (12), with a cover (5) which covers the extending coil parts and the contact elements (4), with a generally plate-shaped support element (2) to accommodate the coils (1) which is an integral component of the cover (5), and the cover (5) or a portion of the cover (5) is designed as an electromagnetic controller or for the accommodation of the connecting parts of an electronic controller, characterized in that the holding element (2) facing the coils (1) features several through-holes (3) into which form-locking and/or force-locking closing devices (6) are engaged, in the mounted condition of the cover (5), projecting from the outer surface of the cover (5), and the through-holes (3) accommodate the electrical contact elements (4) of the coils (1) which are connected to the electrical circuit paths (7) in the holding element (2) extending into the through-holes (3).

2. Electrohydraulic pressure control device as claimed in claim 1,
characterized in that the electrical contact elements (4) extend as exposed coil wires directly from the housing of the coils (1), and the contact elements (4) reach the cover with the circuit paths (7) by means of a stop (8) at the support element (2).

3. Electrohydraulic pressure control device as claimed in claim 2,
characterized in that the stop (8) is provided as a step in a protrusion of the coil element (15) which is penetrated by one contact element (4), and in that the protrusion is held at the through-hole (3) in form-locking and/or force-locking engagement therewith.

4. Electrohydraulic pressure control device as claimed in claim 1,
characterized in that each coil (1) is covered by a yoke ring (9) with radial free play, and in that a compression spring (11) is positioned between each yoke ring (9) and the cover (5).

5. Electrohydraulic pressure control device as claimed in claim 1,
characterized in that the circuit paths (7) are integrated in the support element (2).

6. Electrohydraulic pressure control device as claimed in claim 1,
characterized in that the support element (2) is combined as a single piece with the cover (5), and in that the support element (2) is configured as a plug connection (10).

7. Method of producing an electrohydraulic pressure control device as claimed in claim 4,
characterized in that the circuit paths (7) are installed in an injection mold, and the circuit paths (7) are spray-coated with the doughy injection molding compound in the injection molding mold to produce a cover housing holding the support element (2), in that the yoke rings (9) are inverted over the coils (1), in that the compression springs (11) are positioned between the yoke rings (9) and the support element (2) in the cover (5), and the completed coils (1) with their contact elements (4) are pushed up in the through-holes (3) of the support element (2) produced from the injection molding to contact the circuit paths (7), and are connected to the circuit paths (7) and sealed with closing devices (6) from the outer surface of the cover (5).

8. Method of producing an electrohydraulic pressure control device as claimed in claim 7,
characterized in that the connection of the contact elements (4) with the circuit paths (7) is produced by soldering or welding or by locking engagement.

9. Method of producing an electrohydraulic pressure control device as claimed in claim 7,
characterized in that the closing devices (6) are introduced into the through-holes (3) by spraying of casting material, paint, or hot adhesive, to what end the cover (5) forms a constituent of the injection molding tool on which a spray tool (13) with spray nozzles aligned to the through-holes (3) is placed, and wherein opposite the spray tool (13) there is a support device (14) which presses the coils (1) against the support element (2) in order to absorb the spray pressure transferred to the coils (1) during injection molding.

## Revendications

1. Dispositif électrohydraulique de régulation de pression, en particulier dispositif de régulation de pression de freinage, tel qu'un dispositif de régulation antiblocage ou un dispositif de régulation antipatinage en traction, comprenant des soupapes hydrauliques à commande électromagnétique disposées dans un corps (12) récepteur des soupapes, comprenant des bobines (1) faisant saillie par rapport au corps (12) récepteur des soupapes, les bobines (1) étant pourvues, au niveau de leur partie qui fait saillie au-delà du corps (12) récepteur des soupapes, d'éléments de contact électrique (4), comprenant un couvercle (5) qui recouvre les parties saillantes des bobines et les éléments de contact (4), comprenant un élément de support (2) essentiellement configuré en forme de plaque, destiné à recevoir les bobines (1) et formant partie intégrante du couvercle (5), le couvercle (5) ou une partie du couvercle (5) étant réalisé sous forme d'un régulateur électromagnétique ou de manière à recevoir des éléments de raccordement d'un régulateur électronique,
caractérisé en ce que l'élément de support (2) orienté face aux bobines (1) comporte plusieurs ouvertures de passage (3) dans lesquelles sont installés, à l'état assemblé du couvercle (5), des moyens de bouchage (6) à conjugaison des formes ou à engagement à friction, mis en place depuis la face extérieure du couvercle (5), les ouvertures de passage (3) recevant les éléments de contact électriques (4) des bobines (1), qui sont alors reliés à des pistes électriquement conductrices (7) situées dans l'élément de support (2) et pénétrant dans les ouvertures de passage (3).

2. Dispositif électrohydraulique de régulation de pression selon la revendication 1, caractérisé en ce que les éléments de contact électrique (4) sont réalisés sous forme de fils de bobine dénudés ressortant directement du boîtier des bobines (1), les éléments de contact (4) venant en position de recouvrement des pistes conductrices (7) grâce à une butée (8) du corps de bobine (15), aménagée sur l'élément de support (2).

3. Dispositif électrohydraulique de régulation de pression selon la revendication 2, caractérisé en ce que la butée (8) est aménagée sous forme d'un épaulement sur un appendice du corps de bobine (15), que traverse respectivement un élément de contact (4), et en ce que l'appendice est maintenu par conjugaison des formes et/ou par engagement à friction dans l'ouverture de passage (3).

4. Dispositif électrohydraulique de régulation de pression selon la revendication 1, caractérisé en ce que chaque bobine (1) est recouverte par un collier de bride (9) avec un certain jeu radial, et en ce qu'un ressort de pression (11) est positionné entre chaque collier de bride (9) et le couvercle (5).

5. Dispositif électrohydraulique de régulation de pression selon la revendication 1, caractérisé en ce que les pistes conductrices (7) sont intégrées dans l'élément de support (2).

6. Dispositif électrohydraulique de régulation de pression selon la revendication 1, caractérisé en ce que l'élément de support (2) est réuni d'un seul tenant avec le couvercle (5), et en ce que l'élément de support (2) est configuré pour former une prise de raccordement (10).

7. Procédé de fabrication d'un dispositif électrohydraulique de régulation de pression selon la revendication 4, caractérisé en ce que l'on place des pistes électriquement conductrices (7) dans un moule d'injection, que les pistes conductrices sont surmoulées, dans le moule d'injection, à l'aide d'une masse pâteuse de moulage par injection, de manière à former un boîtier de couvercle recevant l'élément de support (2), en ce que l'on emboîte les colliers de bride (9) par-dessus les bobines (1), que l'on positionne les ressorts de pression (11) entre les colliers de bride (9) et l'élément de support (2) dans le couvercle (5), et que l'on emmanche les éléments de contact (4) des bobines ainsi complétées (1) jusqu'en position de contact avec les pistes conductrices (7) dans les ouvertures de passage (3) de l'élément de support (2), qui résultent de l'opération de moulage par injection, et en ce qu'on les relie à la piste conductrice (7) et les obture de façon étanche à l'aide de moyens de bouchage (6) mis en place depuis la face extérieure du couvercle (5).

8. Procédé de fabrication d'un dispositif électrohydraulique de régulation de pression selon la revendication 7, caractérisé en ce que la liaison entre les éléments de contact (4) et les pistes conductrices (7) est établie par brasage, par soudage ou par enclenchement.

9. Procédé de fabrication d'un dispositif électrohydraulique de régulation de pression selon la revendication 7, caractérisé en ce que les moyens de bouchage (6) sont mis en place par injection d'une masse de scellement, de vernis, ou de colle thermofusible dans les ouvertures de passage (3), le couvercle (5) faisant à cette fin partie de l'outil d'injection, et un outil d'injection (13) comprenant des buses d'injection disposées de façon alignée sur les ouvertures de passage (3) étant placé sur ce couvercle, et un dispositif d'appui (14) serrant les bobines (1) contre l'élément de support (2) dans le sens opposé à l'outil d'injection (13), de manière à absorber la pression d'injection transmise aux bobines pendant l'opération d'injection.
